# EUROPEAN PATENT APPLICATION

(11) **EP 4 503 659 A1**
(43) Date of publication of application: **05.02.2025**
(21) Application number: 22933962.7
(22) Date of filing: 28.03.2022
(51) Int. Cl.: H04W 4/029

(54) **METHOD AND APPARATUS FOR ACQUIRING POSITION OF TERMINAL, COMMUNICATION DEVICE, AND STORAGE MEDIUM**

(71) Applicant: Beijing Xiaomi Mobile Software Co., Ltd., Beijing 100085 (CN)
(72) Inventor: LI, Xiaolong, Beijing 100085 (CN); WU, Jinhua, Beijing 100085 (CN); SHEN, Yang, Beijing 100085 (CN)
(74) Representative: Stöckeler, Ferdinand
(86) International application number: PCT/CN2022/083474
(87) International publication number: WO 2023/184105

(57) **Abstract**

Provided in the embodiments of the present disclosure is a method for acquiring the position of a terminal. The method is executed by a core network element. The method comprises: sending first request information to a location management function (LMF), wherein the first request information is used for requesting first positional information of a terminal, the first request information indicates a location requirement, and the location requirement comprises at least one of the following: the first positional information is location information verified by a network, and the first positional information is location information obtained on the basis of a reliable location method.

## Description

### TECHNICAL FIELD

The present disclosure relates to the field of wireless communication technologies, but is not limited to the field of wireless communication technologies, and more particularly to a method and an apparatus for acquiring a location of a terminal, a communication device, and a storage medium.

### BACKGROUND

When a terminal accesses a fifth-generation mobile communication network through a radio access network, an access and mobility management function (AMF) is required to manage and control the terminal access according to a location of a terminal due to requirements of compliance access and the like. For instance, in a case of satellite access, because a satellite cell has extensive coverage, it may cover both country A and country B, or the satellite cell at a border of both countries may cover the territories of both countries. Furthermore, network operators of the two countries may share satellite access, while regulations of country B explicitly prohibit the access of foreign terminals to its domestic operators' networks in a non-roaming manner. At this point, if a terminal from country A accesses the network of country B via the aforementioned satellite, a network device of the operator in country B (for instance, the AMF) should determine whether to permit the terminal's access to the network of country B based on the location of the terminal (which is within the border of country A).

In relevant art, the acquired location information of the terminal is sometimes deceptive and unreliable under certain scenarios, which may compromise security of network communications.

### SUMMARY

Embodiments of the present disclosure disclose a method and an apparatus for acquiring a location of a terminal, a communication device, and a storage medium.

According to a first aspect of embodiments of the present disclosure, there is provided a method for acquiring a location of a terminal. The method is performed by a core network element, and the method includes:
sending first request information to a location management function (LMF);
in which the first request information is configured to request first location information of the terminal, the first request information indicates a location request, and the location request includes at least one of:
   the first location information being location information verified by a network; or
   the first location information being location information obtained based on a reliable positioning method.

In an embodiment, the method further includes:
receiving the first location information sent by the LMF.

In an embodiment, prior to sending the first request information to the LMF, the method further includes:
acquiring the second location information of the terminal from a predetermined object, in which the predetermined object includes at least one of: a terminal, an LMF, or a network element; and determining whether the second location information is reliable;
sending the first request information to the LMF includes:
   sending, in response to determining that the second location information is unreliable, the first request information to the LMF.

In an embodiment, determining whether the second location information is reliable includes:
determining whether the second location information is reliable based on a determination result of whether the predetermined object is reliable;
   or,
determining whether the second location information is reliable based on a determination result of whether a channel for acquiring the second location information from the predetermined object is protected by a security mechanism;
   or,
determined whether the second location information is reliable based on a positioning method for obtaining the second location information.

In an embodiment, determining whether the second location information is reliable based on a positioning method for obtaining the second location information includes:
determining, in response to the second location information being location information obtained based on an unreliable positioning method, the second location information to be unreliable;
   or,
determining, in response to the second location information being location information obtained based on a reliable positioning method, the second location information to be reliable.

In an embodiment, acquiring the second location information of the terminal includes:
sending, in response to acquiring the second location information of the terminal from the LMF, the second request information to the LMF.

In an embodiment, the second request information includes information for subscribing to a positioning method for acquiring the second location information of the terminal.

In an embodiment, the method further includes:
receiving information about the positioning method for acquiring the second location information of the terminal sent by the LMF.

According to a second aspect of the embodiments of the present disclosure, there is provided a method for acquiring a location of a terminal. The method is performed by a location management function (LMF), and the method includes:
receiving the first request information sent by a core network element;
in which the first request information is configured to request first location information of the terminal, the first request information indicates a location request, and the location request includes at least one of:
   the first location information being location information verified by a network; or
   the first location information being location information obtained based on a reliable positioning method.

In an embodiment, the method further includes:
determining, in response to receiving the first request information, the reliable positioning method based on the first request information; and
performing positioning for the terminal based on the reliable positioning method to obtain the first location information.

In an embodiment, the method further includes:
sending the first location information to the core network element.

In an embodiment, the method further includes:
receiving second request information sent by the core network element, in which the second request information is configured to request to acquire the second location information of the terminal.

In an embodiment, the method further includes:
performing positioning, in response to receiving the second request information, for the terminal based on a positioning method to obtain the second location information.

In an embodiment, the method further includes:
sending the second location information to the core network element.

In an embodiment, the second request information further includes information for subscribing to a positioning method for acquiring the second location information of the terminal.

In an embodiment, the method further includes:
sending information about a positioning method for acquiring the second location information of the terminal to the core network element.

According to a third aspect of the embodiments of the present disclosure, there is provided an apparatus for acquiring a location of a terminal. The apparatus includes:
a sending module, configured to send first request information to a location management function (LMF);
in which the first request information is configured to request first location information of the terminal, the first request information indicates a location request, and the location request includes at least one of:
   the first location information being location information verified by a network; or
   the first location information being location information obtained based on a reliable positioning method.

According to a fourth aspect of the embodiments of the present disclosure, there is provided an apparatus for acquiring a location of a terminal. The apparatus includes:
a receiving module, configured to receive first request information sent by a core network element;
in which the first request information is configured to request first location information of the terminal, the first request information indicates a location request, and the location request includes at least one of:
   the first location information being location information verified by a network; or
   the first location information being location information obtained based on a reliable positioning method.

According to a fifth aspect of the embodiments of the present disclosure, there is provided a communication device. The device includes:
a processor; and
a memory for storing instructions executable by the processor;
in which the processor is configured to run the executable instructions to implement the method of any of the embodiments of the present disclosure.

According to a sixth aspect of the embodiments of the present disclosure, there is provided a computer storage medium. The storage medium stores a computer executable program that, when performed by a processor, implements the method of any of the embodiments of the present disclosure.

In the embodiments of the present disclosure, the first request information is sent to the LMF; in which the first request information is configured to request the first location information of the terminal, the first request information indicates the location request, and the location request includes at least one of: the first location information being location information verified by a network; or the first location information being location information obtained based on a predetermined reliable positioning method. Here, the core network element sends the first request information to the LMF, and the location request indicated by the request information requires that the first location information acquired by the LMF is the location information verified by the network and/or the first location information is the location information obtained based on the predetermined reliable positioning method. In this way, the first location information of the terminal obtained by the LMF is the reliable location information, compared with the case where the acquired location information of the terminal is location information which may be unreliable, the security of wireless communication can be improved, and the security of network communication can be ensured.

### BRIEF DESCRIPTION OF THE DRAWINGS

FIG. 1 is a structural diagram of a wireless communication system according to an exemplary embodiment.
FIG. 2 is a diagram of acquiring a location of a terminal according to an exemplary embodiment.
FIG. 3 is a diagram of acquiring a location of a terminal according to an exemplary embodiment.
FIG. 4 is a diagram of acquiring a location of a terminal according to an exemplary embodiment.
FIG. 5 is a flow diagram of a method for acquiring a location of a terminal according to an exemplary embodiment.
FIG. 6 is a flow diagram of a method for acquiring a location of a terminal according to an exemplary embodiment.
FIG. 7 is a flow diagram of a method for acquiring a location of a terminal according to an exemplary embodiment.
FIG. 8 is a flow diagram of a method for acquiring a location of a terminal according to an exemplary embodiment.
FIG. 9 is a flow diagram of a method for acquiring a location of a terminal according to an exemplary embodiment.
FIG. 10 is a flow diagram of a method for acquiring a location of a terminal according to an exemplary embodiment.
FIG. 11 is a flow diagram of a method for acquiring a location of a terminal according to an exemplary embodiment.
FIG. 12 is a flow diagram of a method for acquiring a location of a terminal according to an exemplary embodiment.
FIG. 13 is a flow diagram of a method for acquiring a location of a terminal according to an exemplary embodiment.
FIG. 14 is a flow diagram of a method for acquiring a location of a terminal according to an exemplary embodiment.
FIG. 15 is a flow diagram of a method for acquiring a location of a terminal according to an exemplary embodiment.
FIG. 16 is a flow diagram of a method for acquiring a location of a terminal according to an exemplary embodiment.
FIG. 17 is a flow diagram of a method for acquiring a location of a terminal according to an exemplary embodiment.
FIG. 18 is a structural diagram of an apparatus for acquiring a location of a terminal according to an exemplary embodiment.
FIG. 19 is a structural diagram of an apparatus for acquiring a location of a terminal according to an exemplary embodiment.
FIG. 20 is a structural diagram of a terminal according to an exemplary embodiment.
FIG. 21 is a block diagram of a base station according to an exemplary embodiment.

### DETAILED DESCRIPTION

Reference will now be made in detail to exemplary embodiments, examples of which are illustrated in the accompanying drawings. Where the following description refers to the accompanying drawings, like numbers in different drawings indicate the same or similar elements, unless otherwise indicated. The exemplary embodiments described in the following illustrative examples do not represent all embodiments consistent with the embodiments of the present disclosure. Rather, they are merely examples of apparatus and methods consistent with certain aspects of the embodiments of the disclosure as detailed in the appended claims.

The term used in the embodiments of the disclosure is for the purpose of describing particular embodiments only and is not intended to be limited to the embodiments of the disclosure. As used in the embodiments of the disclosure and the appended claims, the singular forms "a", "an", and "this" are intended to include the plural forms as well, unless the context clearly indicates otherwise. It should also be understood that the term "and/or" as used herein refers to and encompasses any and all possible combinations of one or more of the associated listed items.

It should be understood that, although the terms the first, the second, third, etc. may be used in describing various information in embodiments of the present disclosure, such information should not be limited to these terms. These terms are only used to distinguish one type of information from another. For example, the first information may also be referred to as the second information, and similarly, the second information may also be referred to as the first information, without departing from the scope of embodiments of the present disclosure. Depending on the context, the word "if" as used herein may be interpreted as "while", "when" or "in response to determining that".

For purposes of brevity and ease of understanding, the terms "greater than" or "less than" are used herein when characterizing size relationships. However, for a person skilled in the art, it can be understood that the term "greater than" also encompasses the meaning of "greater than or equal to" "less than" also encompasses the meaning of "less than equal to".

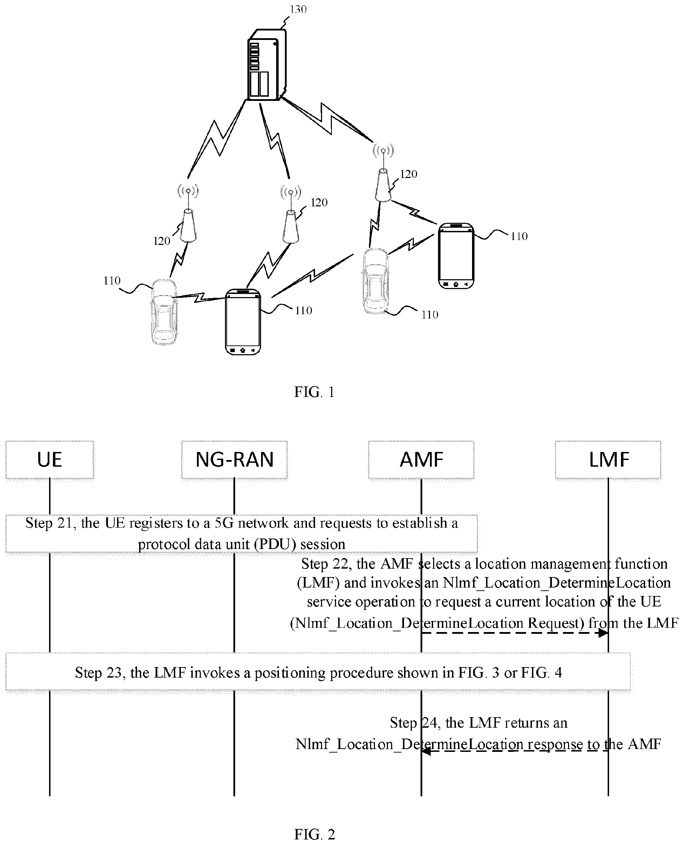

Referring to FIG. 1, a structural diagram of a wireless communication system provided by an embodiment of the present disclosure is shown. As shown in FIG. 1, the wireless communication system is a communication system based on mobile communication technologies, and the wireless communication system may include: several user equipments 110 and several base stations 120.

The user equipment 110 may be a device that provides voice and/or data connectivity to a user. The user equipment 110 may communicate with one or more core networks via a radio access network (RAN), and the user equipment 110 may be an Internet of Things user equipment, such as a sensor device, a mobile phone, and a computer having the Internet of Things user equipment, and may be, for example, a fixed, portable, pocket, hand-held, computer-built or vehicle-mounted apparatus. For example, a station (STA), subscriber unit, subscriber station, mobile station, mobile, remote station, access point, remote terminal, access terminal, user terminal, user agent, user equipment, or user equipment. Alternatively, the user equipment 110 may be a device of an unmanned aerial vehicle. Alternatively, the user equipment 110 may be an on-board device, such as a driving computer with wireless communication capability, or a wireless user equipment connected to the driving computer. Alternatively, the user equipment 110 may be a roadside device, such as a street light, signal light, or other roadside device having wireless communication capabilities.

The base station 120 may be a network device in a wireless communication system. The wireless communication system may be a 4^{th} generation mobile communication (4G) system, also known as a long-term evolution (LTE) system; alternatively, the wireless communication system may be a 5G system, also known as a new air interface system or a 5G NR system. Alternatively, the wireless communication system may be a further generation of the 5G system. An access network in the 5G system may be referred to as a new generation-radio access network (NG-RAN).

The base station 120 may be an evolved base station (eNB) used in a 4G system. Alternatively, the base station 120 may be a gNB in a 5G system using a centralized distributed architecture. When the base station 120 employs a centralized architecture, it typically includes a centralized unit (CU) and at least two distributed units (DUs). The CU is provided with a protocol stack of a packet data convergence protocol (PDCP) layer, a radio link control (RLC) protocol layer, and a media access control (MAC) layer. The DU is provided with a physical (PHY) layer protocol stack. The embodiments of the present disclosure do not limit the specific implementation of the base station 120.

A wireless connection may be established between the base station 120 and the user equipment 110 over a wireless air interface. In different embodiments, the wireless air interface is a wireless air interface based on a fourth generation mobile communication network technology (4G) standard; alternatively, the wireless air interface is a wireless air interface based on a fifth generation mobile communication network technology (5G) standard, for example, the wireless air interface is a new air interface; alternatively, the wireless air interface may be a wireless air interface based on a next generation mobile communication network technology standard beyond 5G.

In some embodiments, an end to end (E2E) connection may also be established between the user equipments 110, for example vehicle to vehicle (V2V) communication, vehicle to infrastructure device (V2I) communication, and vehicle to pedestrian (V2P) communication in vehicle to everything (V2X).

Here, the user equipment described above may be regarded as a terminal device of the following embodiments.

In some embodiments, the wireless communication system may further include a network management device 130.

Several base stations 120 are respectively connected to a network management device 130. The network management device 130 may be a core network device in a wireless communication system. For example, the network management device 130 may be a mobility management entity (MME) in an evolved packet core network (EPC). Alternatively, the network management device may be another core network device, such as a serving gateway (SGW), a public data network gateway (PGW), a policy and charging rules function (PCRF), or a home subscriber server (HSS), etc. The embodiments of the present disclosure are not limited to the implementation form of the network management device 130.

In order to facilitate the understanding of those skilled in the art, the embodiments of the disclosure list a plurality of implementations to clearly illustrate the embodiments of the present disclosure. Of course, those skilled in the art will appreciate that the embodiments of the present disclosure provide a plurality of embodiments that can be implemented separately, can also be executed in combination with the methods of other embodiments in the embodiments of the present disclosure, and can also be executed alone or in combination with some methods of other related art. This is not limited in the embodiments of the disclosure.

In order to better understand the technical solution described in any of the embodiments of the present disclosure, firstly, an application scenario in the related art is described:
In one embodiment, referring to FIG. 2, an AMF may invoke a network induced location request to acquire user location information. A method for acquiring user location information includes the following steps.

In step 21, a UE registers to a 5G network and requests to establish a protocol data unit (PDU) session.

In step 22, the AMF selects a location management function (LMF) and invokes an Nlmf_Location_DetermineLocation service operation to request a current location of the UE (Nlmf_Location_DetermineLocation Request) from the LMF. The service operation includes an LCS correlation identifier, a serving cell identify of a primary cell in a master radio access network node and a primary cell in a secondary radio access network node (when available based on a dual connectivity scenario), and an indication of a location request from a regulatory services client (e.g. an emergency service), and may include an indication of whether the UE supports a LTE positioning protocol (LPP), required quality of service (QoS) and supported geographical area description (GAD) shape, and an AMF identity.

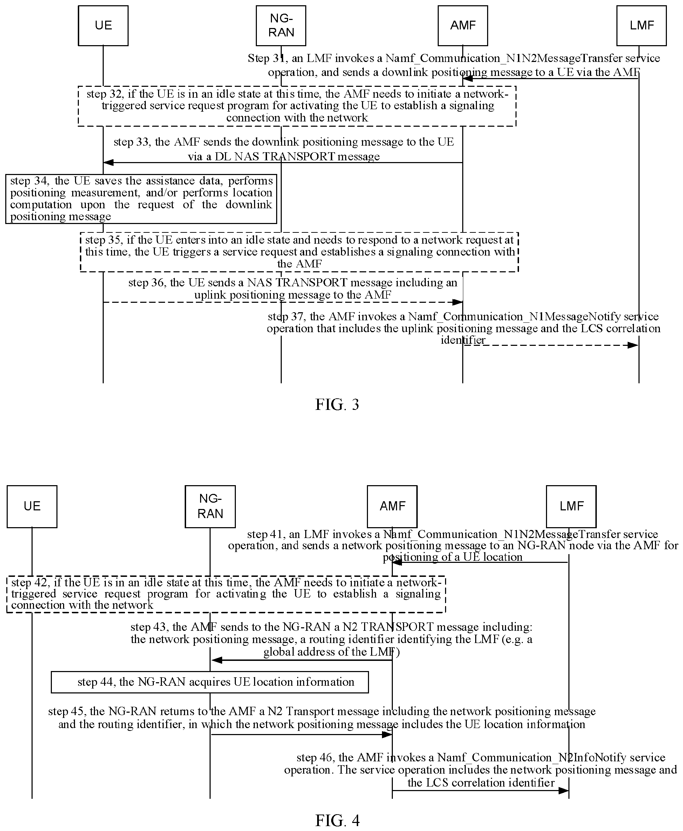

In step 23, the LMF invokes a positioning procedure shown in FIG. 3 or FIG. 4.

In step 24, the LMF returns an Nlmf_Location_DetermineLocation response to the AMF, which includes a current location of the UE, the LCS correlation identifier, a location estimate, its age and accuracy, and may include information about a positioning method.

With reference to FIG. 3, a UE positioning method or a UE assisted positioning method is realized by implementing step 23 in FIG. 2, and the method includes the following steps.

In step 31, an LMF invokes a Namf_Communication_N1N2MessageTransfer service operation, and sends a downlink positioning message to a UE via the AMF. The service operation includes the downlink positioning message. A session ID parameter of the Namf_Communication_N1N2MessageTransfer service operation is set as an LCS correlation identifier, and the downlink positioning message is configured to request location information from the UE, to provide assistance data to the UE or to request a UE capability.

In step 32, if the UE is in an idle state at this time, the AMF needs to initiate a network-triggered service request program for activating the UE to establish a signaling connection with the network.

In step 33, the AMF sends the downlink positioning message to the UE via a DL NAS TRANSPORT message. The message includes: a routing identifier set to the LCS correlation identifier in the DL NAS TRANSPORT message. The downlink positioning message requests the UE to respond to the network, for example, requesting the UE to confirm the downlink positioning message, to return location information, or to return the UE capability.

In step 34, the UE saves the assistance data, performs positioning measurement, and/or performs location computation upon the request of the downlink positioning message.

In step 35, if the UE enters into an idle state and needs to respond to a network request at this time, the UE triggers a service request and establishes a signaling connection with the AMF.

In step 36, the UE sends a NAS TRANSPORT message including an uplink positioning message to the AMF for confirming the downlink positioning message, returning the location information or returning the UE capability.

In step 37, the AMF invokes a Namf_Communication_N1MessageNotify service operation that includes the uplink positioning message and the LCS correlation identifier. If the UE needs to send multiple uplink positioning messages, steps 36 and 37 may be repeated. Steps 31 to 37 may be repeated for sending new assistance data, further requesting UE location information and a UE capability.

With reference to FIG. 4, a network positioning method or a network-assisted positioning method is realized by implementing the step 23 in FIG. 2, and the method includes the following steps.

In step 41, an LMF invokes a Namf_Communication_N1N2MessageTransfer service operation, and sends a network positioning message to an NG-RAN node via the AMF for positioning of a UE location. The service operation includes the network positioning message requesting location information of the UE from the NG-RAN and an LCS correlation identifier.

In step 42, if the UE is in an idle state at this time, the AMF needs to initiate a network-triggered service request program for activating the UE to establish a signaling connection with the network.

In step 43, the AMF sends to the NG-RAN a N2 TRANSPORT message including: the network positioning message, a routing identifier identifying the LMF (e.g. a global address of the LMF).

In step 44, the NG-RAN acquires UE location information.

In step 45, the NG-RAN returns to the AMF a N2 Transport message including the network positioning message and the routing identifier, in which the network positioning message includes the UE location information.

In step 46, the AMF invokes a Namf_Communication_N2InfoNotify service operation. The service operation includes the network positioning message and the LCS correlation identifier. The steps 1 to 6 may be repeated to further acquire UE location information.

Satellite cell coverage is large and multiple public land mobile networks (PLMNs) may share the satellite access. For example, one satellite cell can cover both an operator network of a country A and an operator network of a country B. Therefore, when a user accesses via the satellite, an operator network needs to perform location verification for the user access according to laws and regulations of various countries and regions and verify whether the user is allowed to access the corresponding network in the current location.

When the UE accesses via the satellite, the AMF determines whether the UE is allowed to access the PLMN containing the AMF in a current tracking area according to current location information (e.g. tracking area information) of the UE reported by a base station (e.g. gNB). If it is allowed, a UE access registration process is completed. If it is not allowed, the UE's access request is rejected and a reason for rejection is explained. When the UE receives the rejection response, it is determined that the UE is not allowed to access the PLMN in the current location according to the rejection reason, and the UE can reselect other PLMN to access.

In the above-mentioned location verification process performed according to the current location of the UE, reporting the location by the gNB is an optional process, namely, the gNB may not report the location of the UE or report an approximate location of the UE because the current location of the UE cannot be acquired. In this case, the AMF may first accept the access request of the UE, acquire the UE location information through the positioning procedure, perform location verification after acquiring the UE location information, and initiate a UE de-registration process if the access is not allowed.

In the related art, there is a problem that the UE spoofs its own location to the network, namely, the UE reports an unreliable location.

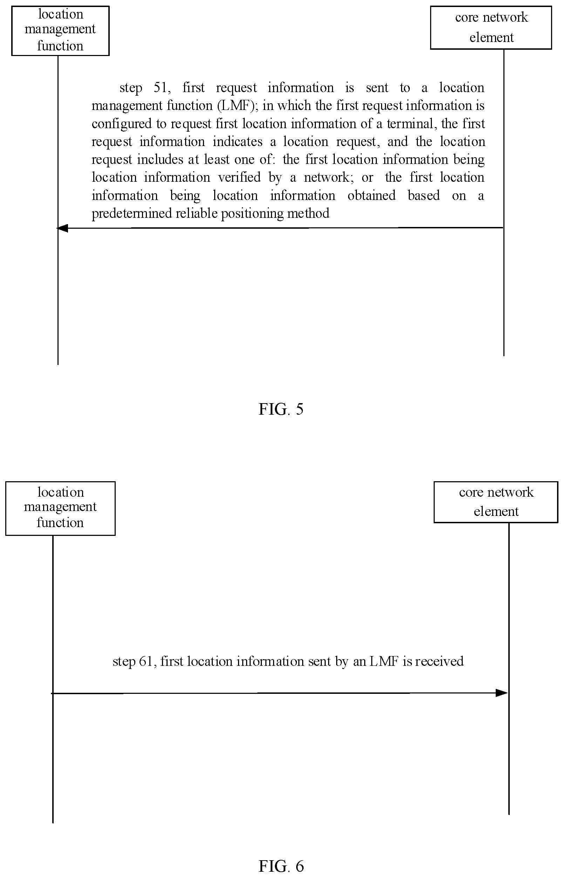

As shown in FIG. 5, this embodiment provides a method for acquiring a location of a terminal. The method is performed by a core network element, and the method includes the following step.

In step 51, first request information is sent to a location management function (LMF);

The first request information is configured to request first location information of a terminal, the first request information indicates a location request, and the location request includes at least one of:
the first location information being location information verified by a network; or
the first location information being location information obtained based on a predetermined reliable positioning method.

Here, the terminal referred to in the present disclosure may be but is not limited to, a mobile phone, a wearable device, a vehicle-mounted terminal, a road side unit (RSU), a smart home terminal, an industrial sensing device and/or a medical device, etc. In some embodiments, the terminal may be a redcap terminal or a new air interface NR terminal of a predetermined version (e.g. an NR terminal of R17).

The base station referred to in the present disclosure may be various types of base stations, e.g. a base station of a third generation mobile communication (3G) network, a base station of a fourth generation mobile communication (4G) network, a base station of a fifth generation mobile communication (5G) network, or other evolved base stations.

The core network element referred to in the present disclosure may be an access control and mobility management function (AMF), a sensing application (Sensing App), etc. It should be noted that the network element is not limited to the above-mentioned example, and may also be other network elements having a communication function, and of course, the core network element may be any network element other than a location management function (e.g. LMF). In some embodiments of the present disclosure, the network elements may be deployed individually as a communication node or may be deployed uniformly within an existing network element. In summary, the core network element may be understood as a logical node that may be flexibly deployed in a network and is not limited herein.

In an embodiment, the first request information is sent to the LMF, in which the first request information is configured to request the first location information of the terminal, the first request information indicates the location request, and the location request includes at least one of: the first location information being location information verified by the network; or the first location information being location information obtained based on the predetermined reliable positioning method. The first location information is received from the LMF.

In an embodiment, the second location information of the terminal is acquired; it is determined whether the second location information is reliable; and in response to determining the second location information to be unreliable, the first request information is sent to the LMF; in which the first request information is configured to request the first location information of the terminal, the first request information indicates the location request, and the location request includes at least one of: the first location information being location information verified by a network; the first location information being location information obtained based on a predetermined reliable positioning method.

In an embodiment, the second location information of the terminal is acquired from the terminal; it is determined whether the second location information is reliable; and in response to determining the second location information to be unreliable, the first request information is sent to the LMF.

In an embodiment, the second location information of the terminal is acquired from the LMF; it is determined whether the second location information is reliable; and in response to determining the second location information to be unreliable, the first request information is sent to the LMF.

In an embodiment, the second location information of the terminal is acquired from an access network device; it is determined whether the second location information is reliable; and in response to determining the second location information to be unreliable, the first request information is sent to the LMF.

In an embodiment, the second location information of the terminal is acquired from the LMF; it is determined whether the second location information is reliable based on a determination result of whether a positioning method for acquiring the second location information is reliable; in response to determining that the positioning method is unreliable, the second location information is determined to be unreliable; and in response to determining the second location information to be unreliable, the first request information is sent to the LMF. It is noted that, by way of example, the positioning method shown in FIG. 3 is an unreliable positioning method and the method shown in FIG. 4 is a reliable positioning method, but the positioning method of the present disclosure is not limited to the above two positioning methods.

In an embodiment, the second location information of the terminal is acquired from a predetermined object; it is determined whether the second location information is reliable based on a determination result of whether the predetermined object is reliable; in response to determining that the predetermined object is an unreliable predetermined object, the second location information is determined to be unreliable; and in response to determining the second location information to be unreliable, the first request information is sent to the LMF. Here, the predetermined object may be a terminal, a network element, and/or an LMF.

In an embodiment, the second location information of the terminal is acquired from the predetermined object; it is determined whether the second location information is reliable based on a determination result of whether a channel for acquiring the second location information from the predetermined object is protected by a security mechanism; in response to determining that the channel for acquiring the second location information is not protected by the security mechanism, the second location is determined to be unreliable; and in response to determining the second location information to be unreliable, the first request information is sent to the LMF. Here, the predetermined object may be a terminal, a network element, and/or an LMF.

In an embodiment, in response to a requirement of acquiring the second location information of the terminal from the LMF, second request information is sent to the LMF; the second location information sent by the LMF with regard to the second request information is received; it is determined whether the second location information is reliable; in response to determining the second location information to be unreliable, the first request information is sent to the LMF. The first request information is configured to request the first location information of the terminal, the first request information indicates the location request, and the location request includes at least one of: the first location information being location information verified by a network; the first location information being location information obtained based on a predetermined reliable positioning method.

In an embodiment, in response to a requirement of acquire the second location information of the terminal from the LMF, the second request information is sent to the LMF, in which the second request information includes information for subscribing to a positioning method for acquiring the second location information of the terminal; the second location information and the information about the positioning method sent by the LMF with regard to the second request information are received; it is determined whether the second location information is reliable based on the information about the positioning method; and in response to determining the second location information to be unreliable, the first request information is sent to the LMF. The first request information is configured to request the first location information of the terminal, the first request information indicates the location request, and the location request includes at least one of: the first location information being location information verified by a network; the first location information being location information obtained based on a predetermined reliable positioning method.

In an embodiment, information about the positioning method for acquiring the second location information of the terminal is received from the LMF; in response to the requirement of acquiring the second location information of the terminal from the LMF, the second request information is sent to the LMF; the second location information and the information about the positioning method sent by the LMF with regard to the second request information are received; it is determined whether the second location information is reliable based on the information about the positioning method; in response to determining the second location information to be unreliable, the first request information is sent to the LMF. The first request information is configured to request the first location information of the terminal, the first request information indicates the location request, and the location request includes at least one of: the first location information being location information verified by a network; the first location information being location information obtained based on a predetermined reliable positioning method.

In embodiments of the present disclosure, the first request information is sent to the LMF; in which the first request information is configured to request the first location information of the terminal, the first request information indicates the location request, and the location request includes at least one of: the first location information being location information verified by a network; or the first location information being location information obtained based on a predetermined reliable positioning method. Here, the core network element sends the first request information to the LMF, and the location request indicated by the first request information requires that the first location information acquired by the LMF is location information verified by the network and/or the first location information is location information obtained based on the predetermined reliable positioning method. In this way, the first location information of the terminal obtained by the LMF is the reliable location information, compared with the case where the acquired location information of the terminal is location information which may be unreliable, the security of wireless communication can be improved and the security of network communication can be ensured.

It should be noted that those skilled in the art can understand that the method provided in the embodiments of the present disclosure can be performed alone or together with some methods in the embodiments of the present disclosure or some methods in the related art.

As shown in FIG. 6, the present embodiment provides a method for acquiring a location of a terminal. The method is performed by a core network element, and the method includes the following step.

In step 61, first location information sent by an LMF is received.

In an embodiment, first request information is sent to the LMF; in which the first request information is configured to request the first location information of a terminal, the first request information indicates a location request, and the location request includes at least one of: the first location information being location information verified by a network; the first location information being location information obtained based on a predetermined reliable positioning method. The first location information sent by the LMF is received. An associated service is performed based on the first location information. The associated service may be a network access grant service.

In an embodiment, the first location information is acquired from a terminal, a base station, or an LMF; in response to determining that the first location information is unreliable, the first request information is sent to the LMF; in which the first request information is configured to request first location information of a terminal, the first request information indicates a location request, and the location request includes at least one of: the first location information being location information verified by a network; the first location information being location information obtained based on a predetermined reliable positioning method. The first location information sent by the LMF is received. An associated service is performed based on the first location information.

It should be noted that those skilled in the art can understand that the methods provided in the embodiments of the present disclosure can be performed alone or together with some methods in the embodiments of the present disclosure or some methods in the related art.

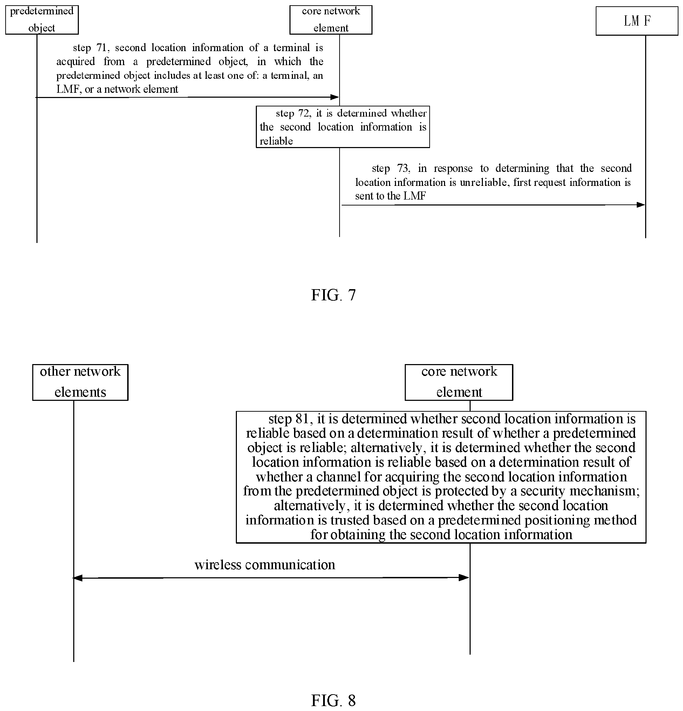

As shown in FIG. 7, the present embodiment provides a method for acquiring a location of a terminal. The method is performed by a core network element, and the method includes the following steps.

In step 71, second location information of a terminal is acquired from a predetermined object, in which the predetermined object includes at least one of: a terminal, an LMF, or a network element.

In step 72, it is determined whether the second location information is reliable.

In step 73, in response to determining that the second location information is unreliable, first request information is sent to the LMF.

It is noted that the network element may be an access network element or a core network element.

In an embodiment, the second location information of the terminal is acquired; it is determined whether the second location information is reliable based on a determination result of whether a positioning method for acquiring the second location information is reliable; in response to determining that the positioning method is unreliable, the second location information is determined to be unreliable; in response to determining the second location information to be unreliable, the first request information is sent to the LMF. It is noted that, by way of example, the positioning method shown in FIG. 3 is an unreliable positioning method and the method shown in FIG. 4 is a reliable positioning method, but the positioning method of the present disclosure is not limited to the above two positioning methods.

In an embodiment, in response to determining that the positioning method for acquiring the second location information is the first positioning method (e.g. the positioning method illustrated in FIG. 3), the second location information is determined to be unreliable; alternatively, in response to determining that the positioning method for acquiring the second location information is the second positioning method (e.g. the positioning method illustrated in FIG. 4), the second location information is determined to be reliable.

It should be noted that those skilled in the art can understand that the methods provided in the embodiments of the present disclosure can be performed alone or together with some methods in the embodiments of the present disclosure or some methods in the related art.

As shown in FIG. 8, the present embodiment provides a method for acquiring a location of a terminal. The method is performed by a core network element, and the method includes the following step.

In step 81, it is determined whether second location information is reliable based on a determination result of whether a predetermined object is reliable; alternatively, it is determined whether the second location information is reliable based on a determination result of whether a channel for acquiring the second location information from the predetermined object is protected by a security mechanism; alternatively, it is determined whether the second location information is reliable based on a predetermined positioning method for obtaining the second location information.

In an embodiment, the second location information of the terminal is acquired from the predetermined object; it is determined whether the second location information is reliable based on the determination result of whether the predetermined object is reliable; in response to determining that the predetermined object is an unreliable predetermined object, the second location information is determined to be unreliable; in response to determining the second location information to be unreliable, the first request information is sent to the LMF. Here, the predetermined object may be a terminal and/or a base station.

In an embodiment, the second location information of the terminal is acquired from a predetermined object; it is determined whether the second location information is reliable based on a determination result of whether a channel for acquiring the second location information from the predetermined object is protected by a security mechanism; in response to determining that the channel for acquiring the second location information is not protected by the security mechanism, the second location is determined to be unreliable; in response to determining the second location information to be unreliable, the first request information is sent to the LMF. Here, the predetermined object may be a terminal and/or a network element.

In an embodiment, the second location information of the terminal is acquired; it is determined whether the second location information is reliable based on a determination result of whether a positioning method for acquiring the second location information is reliable; in response to determining that the positioning method is unreliable, the second location information is determined to be unreliable; in response to determining the second location information to be unreliable, the first request information is sent to the LMF. It is noted that, by way of example, the positioning method shown in FIG. 3 is an unreliable positioning method and the method shown in FIG. 4 is a reliable positioning method, but the positioning method of the present disclosure is not limited to the above two positioning methods.

It should be noted that those skilled in the art can understand that the method provided in the embodiments of the present disclosure can be performed alone or together with some methods in the embodiments of the present disclosure or some methods in the related art.

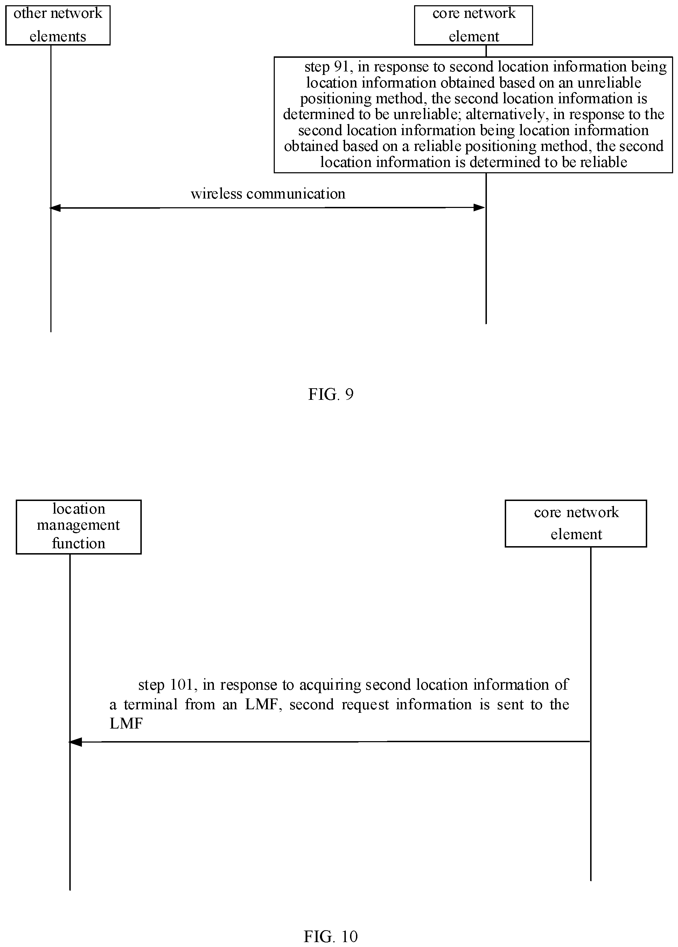

As shown in FIG. 9, the present embodiment provides a method for acquiring a location of a terminal. The method is performed by a core network element, and the method includes the following step.

In step 91, in response to second location information being location information obtained based on an unreliable positioning method, the second location information is determined to be unreliable; alternatively, in response to the second location information being location information obtained based on a reliable positioning method, the second location information is determined to be reliable.

In an embodiment, the second location information of the terminal is acquired; it is determined whether the second location information is reliable based on a determination result of whether a positioning method for acquiring the second location information is reliable; in response to determining that the positioning method for acquiring the second location information is a first positioning method (e.g. the positioning method illustrated in FIG. 3), the second location information is determined to be unreliable; alternatively, in response to determining that the positioning method for acquiring the second location information is a second positioning method (e.g. the positioning method illustrated in FIG. 4), the second location information is determined to be reliable; in response to determining that the positioning method is an unreliable positioning method, the second location information is determined to be unreliable; in response to determining the second location information to be unreliable, the first request information is sent to the LMF. It is noted that, by way of example, the positioning method shown in FIG. 3 is an unreliable positioning method and the method shown in FIG. 4 is a reliable positioning method, but the positioning method of the present disclosure is not limited to the above two positioning methods.

It should be noted that those skilled in the art can understand that the method provided in the embodiments of the present disclosure can be performed alone or together with some methods in the embodiments of the present disclosure or some methods in the related art.

As shown in FIG. 10, the present embodiment provides a method for acquiring a location of a terminal. The method is performed by a core network element, and the method includes the following step.

In step 101, in response to acquiring second location information of a terminal from an LMF, second request information is sent to the LMF.

In an embodiment, the second request information is sent to the LMF, in response to a requirement of acquiring the second location information of the terminal from the LMF.

In an embodiment, in response to a requirement of performing a service associated with the location information of the terminal, it is determined that there is a requirement of acquiring the second location information of the terminal from the LMF. In response to the requirement of acquiring the second location information of the terminal from the LMF, the second request information is sent to the LMF. The second location information sent by the LMF with regard to the second request information is received; it is determined whether the second location information is reliable; in response to determining the second location information to be unreliable, the first request information is sent to the LMF. The first request information is configured to request first location information of a terminal, the first request information indicates a location request, and the location request includes at least one of: the first location information being location information verified by a network; or the first location information being location information obtained based on a predetermined reliable positioning method. The first location information is received. A service associated with the location information of a terminal is performed based on the first location information.

In an embodiment, in response to a requirement of performing a service associated with the location information about the terminal, it is determined that there is a requirement of acquiring the second location information of the terminal from the LMF. In response to the requirement of acquiring the second location information of the terminal from the LMF, the second request information is sent to the LMF, in which the second request information includes information for subscribing to a positioning method for acquiring the second location information of the terminal; the second location information and information about the positioning method sent by the LMF with regard to the second request information (namely, reporting by the LMF to the core network element) are received; it is determined whether the second location information is reliable based on the information about the positioning method; in response to determining the second location information to be unreliable, the first request information is sent to the LMF. The first request information is configured to request first location information of a terminal, the first request information indicates a location request, and the location request includes at least one of: the first location information being location information verified by a network; or the first location information being location information obtained based on a predetermined reliable positioning method. The first location information is received. A service associated with the location information of a terminal is performed based on the first location information.

It should be noted that those skilled in the art can understand that the method provided in the embodiments of the present disclosure can be performed alone or together with some methods in the embodiments of the present disclosure or some methods in the related art.

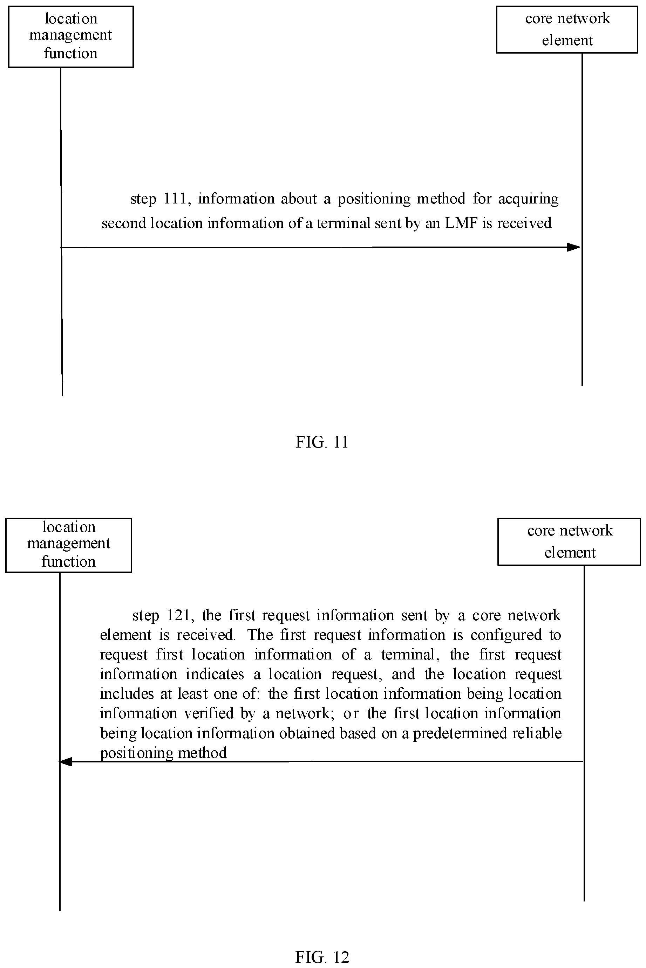

As shown in FIG. 11, the present embodiment provides a method for acquiring a location of a terminal. The method is performed by a core network element, and the method includes the following step.

In step 111, information about a positioning method for acquiring second location information of a terminal sent by an LMF is received.

In an embodiment, in response to a requirement of acquiring the second location information about the terminal from the LMF, second request information is sent to the LMF, in which the second request information includes information for subscribing to the positioning method for acquiring the second location information of the terminal; the second location information and the information about the positioning method sent by the LMF (namely, reporting by the LMF to the core network element) with regard to the second request information are received; it is determined whether the second location information is reliable based on the information about the positioning method; in response to determining the second location information to be unreliable, the first request information is sent to the LMF. The first request information is configured to request first location information of a terminal, the first request information indicates a location request, and the location request includes at least one of: the first location information being location information verified by a network; or the first location information being location information obtained based on a predetermined reliable positioning method.

In an embodiment, information about the positioning method for acquiring the second location information of the terminal sent by an LMF is received; in response to the requirement of acquiring the second location information of the terminal from the LMF, the second request information is sent to the LMF; the second location information and information about the positioning method sent by the LMF with regard to the second request information are received; it is determined whether the second location information is reliable based on the information about the positioning method; in response to determining the second location information to be unreliable, the first request information is sent to the LMF. The first request information is configured to request first location information of a terminal, the first request information indicates a location request, and the location request includes at least one of: the first location information being location information verified by a network; or the first location information being location information obtained based on a predetermined reliable positioning method.

It should be noted that those skilled in the art can understand that the method provided in the embodiments of the present disclosure can be performed alone or together with some methods in the embodiments of the present disclosure or some methods in the related art.

As shown in FIG. 12, the present embodiment provides a method for acquiring a location of a terminal. The method is performed by an LMF, and the method includes the following step.

In step 121, the first request information sent by a core network element is received.

The first request information is configured to request first location information of a terminal, the first request information indicates a location request, and the location request includes at least one of:
the first location information being location information verified by a network; or
the first location information being location information obtained based on a predetermined reliable positioning method.

Here, the terminal referred to in the present disclosure may be, but is not limited to, a mobile phone, a wearable device, a vehicle-mounted terminal, a road side unit (RSU), a smart home terminal, an industrial sensing device and/or a medical device, etc. In some embodiments, the terminal may be a redcap terminal or a new air interface NR terminal of a predetermined version (e.g. an NR terminal of R17).

The base station referred to in the present disclosure may be various types of base stations, e.g. a base station of a third generation mobile communication (3G) network, a base station of a fourth generation mobile communication (4G) network, a base station of a fifth generation mobile communication (5G) network, or other evolved base stations.

The core network element referred to in the present disclosure may be an access control and mobility management function (AMF), a sensing applications (Sensing App), etc. It should be noted that the network element is not limited to the above-mentioned examples, and can also be other network elements with a communication function, and of course, the core network element may not include an LMF. In some embodiments of the present disclosure, network elements may be deployed individually as a communication node or may be deployed uniformly within existing network elements. In summary, a core network element may be understood as a logical node that may be flexibly deployed in a network and is not limited herein.

In an embodiment, the LMF receives the first request information sent by the AMF. The first request information is configured to request the first location information of the terminal, the first request information indicates a location request, and the location request includes at least one of: the first location information being location information verified by a network; or the first location information being location information obtained based on a predetermined reliable positioning method. In response to receiving the first request information, the reliable positioning method is determined based on the first request information; positioning is performed for the terminal based on the reliable positioning method to obtain the first location information. The first location information is sent to the AMF.

In an embodiment, the AMF acquires the second location information of the terminal; the AMF determines whether the second location information is reliable; in response to determining the second location information to be unreliable, the AMF sends the first request information to the LMF; in which the first request information is configured to request first location information of the terminal, the first request information indicates a location request, and the location request includes at least one of: the first location information being location information verified by a network; or the first location information being location information obtained based on a predetermined reliable positioning method; the LMF receives the first request information sent by the AMF.

In an embodiment, the AMF acquires the second location information of the terminal from the terminal; the AMF determines whether the second location information is reliable; in response to determining the second location information to be unreliable, the AMF sends first request information to the LMF. The LMF receives the first request information sent by the AMF.

In an embodiment, the AMF acquires the second location information of the terminal from the LMF; the AMF determines whether the second location information is reliable; in response to determining the second location information to be unreliable, the AMF sends first request information to the LMF. The LMF receives the first request information sent by the AMF.

In an embodiment, the AMF acquires the second location information of the terminal from the access network device; the AMF determines whether the second location information is reliable; in response to determining the second location information to be unreliable, the AMF sends the first request information to the LMF. The LMF receives the first request information sent by the AMF.

In an embodiment, the AMF acquires the second location information of the terminal; the AMF determines whether the second location information is reliable based on a determination result of whether a positioning method for acquiring the second location information is reliable; in response to determining that the positioning method is unreliable, the AMF determines the second location information to be unreliable; in response to determining the second location information to be unreliable, the AMF sends the first request information to the LMF; the LMF receives the first request information sent by the AMF. It is noted that, by way of example, the positioning method shown in FIG. 3 is an unreliable positioning method and the method shown in FIG. 4 is a reliable positioning method, but the positioning method of the present disclosure is not limited to the above two positioning methods.

In an embodiment, the AMF acquires the second location information of the terminal from a predetermined object; the AMF determines whether the second location information is reliable based on a determination result of whether the predetermined object is reliable; in response to determining that the predetermined object is an unreliable predetermined object, the AMF determines the second location information to be unreliable; in response to determining the second location information to be unreliable, the AMF sends the first request information to the LMF; the LMF receives the first request information sent by the AMF. Here, the predetermined object may be a terminal and/or a base station.

In an embodiment, the AMF acquires the second location information of the terminal from a predetermined object; the AMF determines whether the second location information is reliable based on a determination result of whether a channel for acquiring the second location information from the predetermined object is protected by a security mechanism; the AMF determines that the second location is unreliable in response to determining that the channel for acquiring the second location information is not protected by the security mechanism; in response to determining the second location information to be unreliable, the AMF sends the first request information to the LMF; the LMF receives the first request information sent by the AMF. Here, the predetermined object may be a terminal and/or a base station.

In an embodiment, in response to a requirement of acquiring the second location information of the terminal from the LMF, the AMF sends the second request information to the LMF; the AMF receives the second location information sent by the LMF with regard to the second request information; the AMF determines whether the second location information is reliable; in response to determining the second location information to be unreliable, the AFM sends the first request information to the LMF; in which the first request information is configured to request first location information of a terminal, the first request information indicates a location request, and the location request includes at least one of: the first location information being location information verified by a network; or the first location information being location information obtained based on a predetermined reliable positioning method; the LMF receives the first request information sent by the AMF.

In an embodiment, in response to a requirement of acquiring the second location information of the terminal from the LMF, the AMF sends the second request information to the LMF, in which the second request information includes information for subscribing to a positioning method for acquiring the second location information of the terminal; the AMF receives the second location information and information about the positioning method which are sent by the LMF with regard to the second request information (namely, reporting by the LMF to the core network element AMF); it is determined whether the second location information is reliable based on the information about the positioning method; in response to determining the second location information to be unreliable, the AMF sends the first request information to the LMF; in which the first request information is configured to request first location information of the terminal, the first request information indicates a location request, and the location request includes at least one of: the first location information being location information verified by a network; or a the first location information being location information obtained based on a predetermined reliable positioning method; the LMF receives the first request information sent by the AMF.

In an embodiment, the AMF receives information about a positioning method for acquiring the second location information of the terminal sent by the LMF; in response to a requirement of acquiring the second location information of the terminal from the LMF, the AMF sends the second request information to the LMF; the AMF receives the second location information and the information about the positioning method sent by the LMF with regard to the second request information; the AMF determines whether the second location information is reliable based on the information about the positioning method; in response to determining the second location information to be unreliable, the AMF sends the first request information to the LMF; in which the first request information is configured to request first location information of the terminal, the first request information indicates a location request, and the location request includes at least one of: the first location information being location information verified by a network; or the first location information being location information obtained based on a predetermined reliable positioning method; the LMF receives the first request information sent by the AMF.

It should be noted that those skilled in the art can understand that the method provided in the embodiments of the present disclosure can be performed alone or together with some methods in the embodiments of the present disclosure or some methods in the related art.

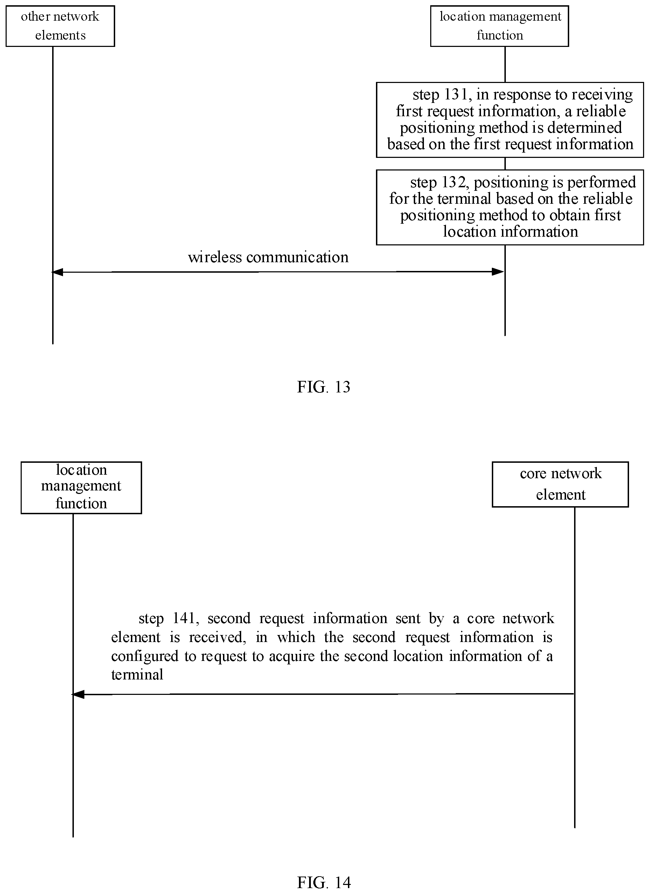

As shown in FIG. 13, the present embodiment provides a method for acquiring a location of a terminal. The method is performed by an LMF, and the method includes the following steps.

In step 131, in response to receiving first request information, a reliable positioning method is determined based on the first request information.

In step 132, positioning is performed for the terminal based on the reliable positioning method to obtain first location information.

In an embodiment, the LMF receives the first request information sent by an AMF; in which the first request information is configured to request the first location information of the terminal, the first request information indicates a location request, and the location request includes at least one of: the first location information being location information verified by a network; or the first location information being location information obtained based on a predetermined reliable positioning method. In response to receiving the first request information, the reliable positioning method is determined based on, but not limited to, the first request information; positioning is performed for the terminal based on the reliable positioning method to obtain the first location information. The first location information is sent to the AMF.

It should be noted that those skilled in the art can understand that the method provided in the embodiments of the present disclosure can be performed alone or together with some methods in the embodiments of the present disclosure or some methods in the related art.

As shown in FIG. 14, the present embodiment provides a method for acquiring a location of a terminal. The method is performed by an LMF, and the method includes the following step.

In step 141, second request information sent by a core network element is received, in which the second request information is configured to request to acquire the second location information of a terminal.

The core network element may be an AMF.

In an embodiment, in response to a requirement of performing a service associated with location information of the terminal, the AMF determines that there is a requirement of acquiring the second location information of the terminal from the LMF. In response to the requirement of acquiring the second location information of the terminal from the LMF, the AMF sends the second request information to the LMF. the second location information sent by the LMF with regard to the second request information is received; the AMF determines whether the second location information is reliable; in response to determining the second location information to be unreliable, the AMF sends the first request information to the LMF; in which the first request information is configured to request first location information of the terminal, the first request information indicates a location request, and the location request includes at least one of: the first location information being location information verified by a network; or the first location information being location information obtained based on a predetermined reliable positioning method. The LMF receives the first request information; and the LMF sends the first location information to the AMF. The AMF performs the service associated with the location information of the terminal based on the first location information.

In an embodiment, in response to a requirement of performing a service associated with location information of the terminal, the AMF determines that there is a requirement of acquiring the second location information of the terminal from the LMF. In response to the requirement of acquiring the second location information of the terminal from the LMF, the AMF sends the second request information to the LMF, in which the second request information includes information for subscribing to a positioning method for acquiring the second location information of the terminal; the AMF receives the second location information and information about the positioning method sent by the LMF with regard to the second request information; the AMF determines whether the second location information is reliable based on the information about the positioning method; in response to determining the second location information to be unreliable, the AMF sends the first request information to the LMF; in which the first request information is configured to request first location information of the terminal, the first request information indicates a location request, and the location request includes at least one of: the first location information being location information verified by a network; or the first location information being location information obtained based on a predetermined reliable positioning method. The LMF receives the first request information; and the LMF sends the first location information to the AMF. The AMF performs the service associated with the location information of the terminal based on the first location information.

It should be noted that those skilled in the art can understand that the method provided in the embodiments of the present disclosure can be performed alone or together with some methods in the embodiments of the present disclosure or some methods in the related art.

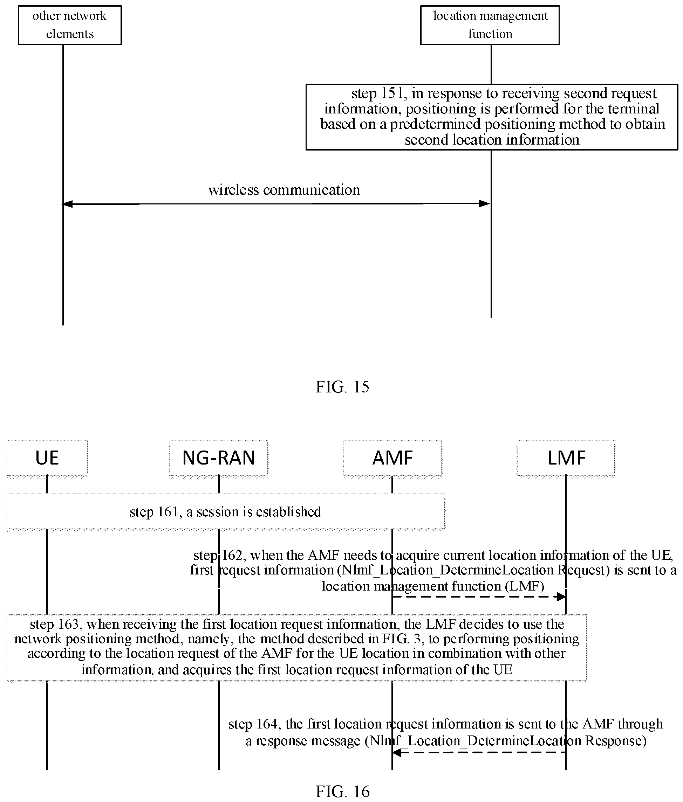

As shown in FIG. 15, the present embodiment provides a method for acquiring a location of a terminal. The method is performed by an LMF, and the method includes the following step.

In step 151, in response to receiving second request information, positioning is performed for the terminal based on a predetermined positioning method to obtain second location information.

In an embodiment, in response to receiving the second request information, positioning is performed for the terminal based on an unreliable positioning method to obtain the second location information. Alternatively, in response to receiving the second request information, positioning is performed for the terminal based on a reliable positioning method to obtain the second location information. The second location information is sent to the AMF.

It is noted that, by way of example, the positioning method shown in FIG. 3 is an unreliable positioning method and the method shown in FIG. 4 is a reliable positioning method, but the positioning method of the present disclosure is not limited to the above two positioning methods.

It should be noted that those skilled in the art can understand that the method provided in the embodiments of the present disclosure can be performed alone or together with some methods in the embodiments of the present disclosure or some methods in the related art.

In order to better understand the embodiments of the present disclosure, the technical solution of the present disclosure is further illustrated in the following three exemplary embodiments, in which a core network element is an AMF in the exemplary embodiments.

### Example 1

With reference to FIG. 16, there is provided a method for acquiring a location of a terminal. The method includes the following steps.

In step 161, a session is established. It may be a regulatory-related session establishment.

In step 162, when the AMF needs to acquire current location information of the UE, first request information (Nlmf_Location_DetermineLocation Request) is sent to a location management function (LMF); in which the first request information is configured to request first location information of a terminal, the first request information indicates a location request, and the location request includes at least one of: the first location information being location information verified by a network; or the first location information being location information obtained based on a predetermined reliable positioning method.

Namely, the AMF considers that the UE location information acquired through a network positioning procedure is reliable, and the UE location information acquired through a UE positioning method is unreliable.

In step 163, when receiving the first location request information, the LMF decides to use the network positioning method, namely, the method described in FIG. 3, to performing positioning according to the location request of the AMF for the UE location in combination with other information, and acquires the first location request information of the UE.

In step 164, the first location request information is sent to the AMF through a response message (Nlmf_Location _DetermineLocation Response).

### Example 2

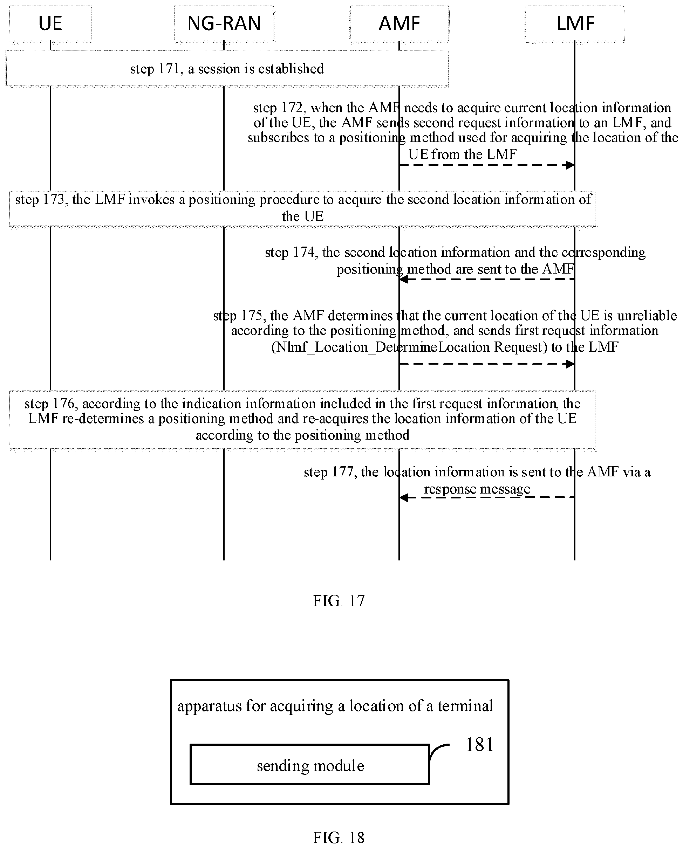

With reference to FIG. 17, there is provided a method for acquiring a location of a terminal. The method includes the following steps.

In step 171, a session is established. It may be a regulatory-related session establishment.

In step 172, when the AMF needs to acquire current location information of the UE, the AMF sends second request information to an LMF, and subscribes to a positioning method used for acquiring the location of the UE from the LMF.

In step 173, the LMF invokes a positioning procedure to acquire the second location information of the UE.

In step 174, the second location information and the corresponding positioning method are sent to the AMF.

In step 175, the AMF determines that the current location of the UE is unreliable according to the positioning method, and sends first request information (Nlmf_Location _DetermineLocation Request) to the LMF; in which the first request information is configured to request the first location information of the terminal, the first request information indicates a location request, and the location request includes at least one of: the first location information being location information verified by a network; or the first location information being location information obtained based on a predetermined reliable positioning method. This requires LMF to reselect to another positioning method.

In step 176, according to the indication information included in the first request information, the LMF re-determines a positioning method and re-acquires the second location information of the UE according to the positioning method.

In step 177, the second location information is sent to the AMF via a response message.

As shown in FIG. 18, the present embodiment provides an apparatus for acquiring a location of a terminal. The apparatus includes:
a sending module 181, configured to send the first request information to a location management function (LMF);
in which the first request information is configured to request first location information of the terminal, the first request information indicates a location request, and the location request includes at least one of:
   the first location information being location information verified by a network; or
   the first location information being location information obtained based on a predetermined reliable positioning method.

It should be noted that those skilled in the art can understand that the method provided in the embodiments of the present disclosure can be performed alone or together with some methods in the embodiments of the present disclosure or some methods in the related art.

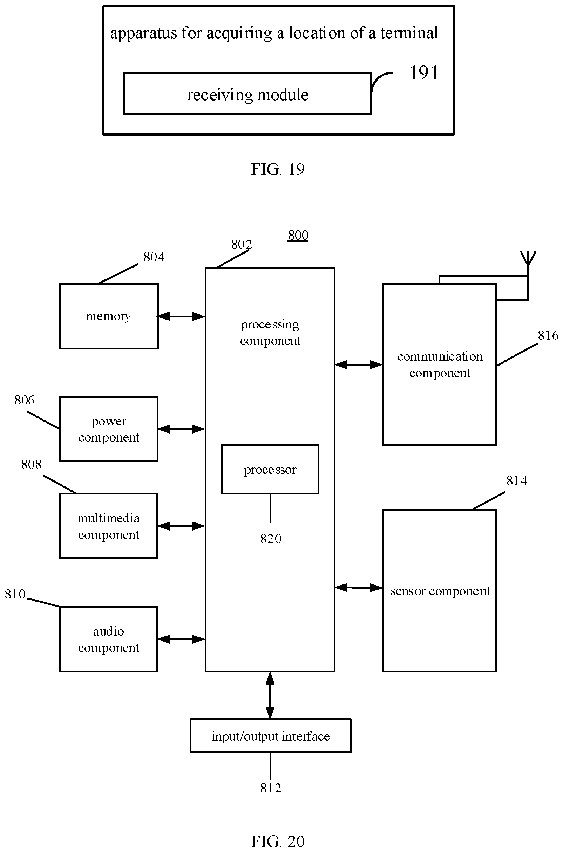

As shown in FIG. 19, the present embodiment provides an apparatus for acquiring a location of a terminal. The apparatus includes:
a receiving module 191, configured to receive the first request information sent by the AMF;
in which the first request information is configured to request first location information of the terminal, the first request information indicates a location request, and the location request includes at least one of:
   the first location information being location information verified by a network; or
   the first location information being location information obtained based on a predetermined reliable positioning method.

It should be noted that those skilled in the art can understand that the method provided in the embodiments of the present disclosure can be performed alone or together with some methods in the embodiments of the present disclosure or some methods in the related art.

The embodiments of the present disclosure provide a communication device. The device includes:
a processor;
a memory for storing processor-executable instructions;
in which the processor is configured to implement the method as applied to any embodiment of the present disclosure when running executable instructions.

The processor may include various types of storage media that are non-transitory computer storage media capable of continuing to remember the information stored thereon after the communication device is powered down.

The processor may be coupled to the memory via a bus or the like for reading executable programs stored on the memory.

Embodiments of the present disclosure also provide a computer storage medium. A computer-executable program is stored on the computer storage medium, and when being performed by a processor, implements the method of any embodiment of the disclosure.

With respect to the apparatus in the above-described embodiments, the specific manner in which the various modules execute operations has been described in detail in connection with the embodiments of the method and will not be described in detail herein.

As shown in FIG. 20, one embodiment of the present disclosure provides a structure of a terminal.

Referring to the terminal 800 shown in FIG. 20, the present embodiment provides a terminal 800, which may specifically be a mobile phone, a computer, a digital broadcasting terminal, a messaging device, a game console, a tablet device, a medical device, an exercise device, a personal digital assistant, etc.

Referring to FIG. 20, a terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of terminal 800, such as operations associated with display, telephone calls, data communications, camera operations, and recording operations. The processing component 802 may include one or more processors 820 to execute instructions to execute all or part of the steps of the methods described above. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operation at the terminal 800. Examples of such data include instructions for any application or method operating on the terminal 800, contact data, phonebook data, messages, pictures, videos, etc. The memory 804 may be implemented by any type or combination of volatile or non-volatile memory devices, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disks.

The power component 806 provides power to the various components of the terminal 800. The power component 806 may include a power management system, one or more power supplies, and other components associated with generating, managing, and distributing power for terminal 800.

The multimedia component 808 includes a screen that provides an output interface between the terminal 800 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slides, and gestures on the touch panel. Touch sensors may not only sense the boundaries of a touch or slide action but also detect the duration and pressure associated with the touch or slide operation. In some embodiments, the multimedia component 808 includes a front camera and/or a rear camera. When the terminal 800 is in an operational mode, such as a camera mode or a video mode, the front camera and/or the rear camera may receive external multimedia data. Each of the front camera and the rear camera may be a fixed optical lens system or have a focal length and an optical zoom capability.

The audio component 810 is configured to output and/or input audio signals. For example, the audio component 810 includes a MIC configured to receive external audio signals when the terminal 800 is in an operational mode, such as a call mode, a recording mode, and a voice recognition mode. The received audio signal may be further stored in the memory 804 or sent via the communication component 816. In some embodiments, the audio component 810 also includes a speaker for outputting audio signals.

The I/O interface 812 provides an interface between the processing component 802 and a peripheral interface module, which may be a keyboard, click wheel, button, etc. These buttons may include, but are not limited to: the home button, volume button, start button, and lock button.

The sensor component 814 includes one or more sensors for providing status assessments of various aspects of terminal 800. For example, the sensor component 814 may detect an on/off state of the terminal 800, a relative location of components, such as a display and keypad of the terminal 800, the sensor component 814 may also detect a change in location of the terminal 800 or a component of the terminal 800, the presence or absence of user contact with the terminal 800, an orientation or acceleration/deceleration of the terminal 800, and a temperature change of the terminal 800. The sensor component 814 may include a proximity sensor configured to detect the presence of a nearby object in the absence of any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 may access a wireless network based on a communication standard, such as Wi-Fi, 2G, or 3G, or their combination. In an exemplary embodiment, the communication component 816 receives broadcast signals or broadcast-related information from an external broadcast management system via a broadcast channel. In an exemplary embodiment, the communication component 816 further includes a near-field communication (NFC) module to facilitate short-range communication. For example, the NFC module may be implemented based on RFID technology, IrDA technology, UWB technology, Bluetooth (BT) technology, and other technologies.

In an exemplary embodiment, the terminal 800 may be implemented with one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for executing the methods described above.

In an exemplary embodiment, there is also provided a non-transitory computer-readable storage medium including instructions, such as the memory 804 including instructions. The instructions are executable by the processor 820 of the terminal 800 to execute the methods described above. For example, the non-transitory computer-readable storage medium may be an ROM, a random access memory (RAM), a CD-ROM, a magnetic tape, a floppy disk, an optical data storage equipment, etc.

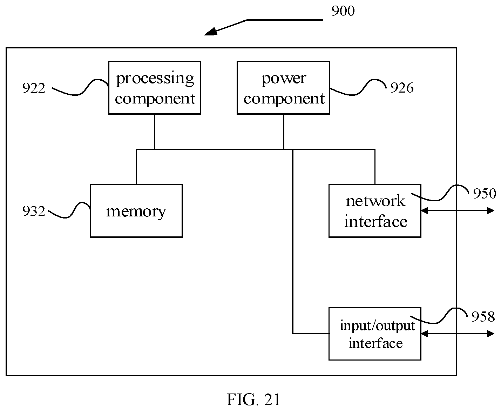

As shown in FIG. 21, an embodiment of the present disclosure shows the structure of a base station. For example, the base station 900 may be provided as a network device. Referring to FIG. 21, the base station 900 includes a processing component 922 that further includes one or more processors and memory resources represented by a memory 932 for storing instructions executable by the processing component 922, such as applications. An application stored in the memory 932 may include one or more modules each corresponding to a set of instructions. Further, the processing component 922 is configured to execute instructions to execute any of the methods described above as applied to the base station.

The base station 900 may also include a power component 926 configured to execute power management of the base station 900, a wired or wireless network interface 950 configured to connect the base station 900 to a network, and an input-output (I/O) interface 958. The base station 900 may operate based on an operating system stored in the memory 932, such as a Windows Server TM, a Mac OS XTM, a UnixTM, a LinuxTM, a FreeBSDTM, or the like.

Other embodiments of the invention will be apparent to those skilled in the art from consideration of the specification and practice of the invention disclosed herein. The present disclosure is intended to cover any variations, uses, or adaptations of the invention following, in general, the principles of the invention and including such departures from the present disclosure as come within known or customary practice in the art to which the invention pertains. It is intended that the specification and embodiments be considered exemplary only, with the true scope and spirit of the invention being indicated by the following claims.

It should be understood that the invention is not limited to the precise arrangements described above and shown in the accompanying drawings and that various modifications and changes may be made without departing from the scope thereof. The scope of the invention is only limited by the appended claims.

## Claims

1. A method for acquiring a location of a terminal, performed by a core network element, comprising:
sending first request information to a location management function (LMF);
wherein the first request information is configured to request first location information of the terminal, the first request information indicates a location request, and the location request comprises at least one of:
the first location information being location information verified by a network; or
the first location information being location information obtained based on a reliable positioning method.

2. The method of claim 1, further comprising:
receiving the first location information sent by the LMF.

3. The method of claim 1, wherein prior to sending the first request information to the LMF, the method further comprises:
acquiring second location information of the terminal from a predetermined object, wherein the predetermined object comprises at least one of: a terminal, an LMF, or a network element; and determining whether the second location information is reliable;
wherein sending the first request information to the LMF comprises:
sending, in response to determining that the second location information is unreliable, the first request information to the LMF.

4. The method of claim 3, wherein determining whether the second location information is reliable comprises
determining whether the second location information is reliable based on a determination result of whether the predetermined object is reliable;
or,
determining whether the second location information is reliable based on a determination result of whether a channel for acquiring the second location information from the predetermined object is protected by a security mechanism;
or,
determining whether the second location information is reliable based on a determination result of whether a positioning method for obtaining the second location information is reliable.

5. The method of claim 3, wherein determining whether the second location information is reliable based on a positioning method for obtaining the second location information comprises:
determining, in response to the second location information being location information obtained based on an unreliable positioning method, the second location information to be unreliable;
or,
determining, in response to the second location information being location information obtained based on a reliable positioning method, the second location information to be reliable.

6. The method of claim 3, wherein acquiring the second location information of the terminal comprises:
sending, in response to acquiring the second location information of the terminal from the LMF, second request information to the LMF.

7. The method of claim 6, wherein the second request information comprises information for subscribing to a positioning method for acquiring the second location information of the terminal.

8. The method of claims 3 to 7, further comprising:
receiving information about the positioning method for acquiring the second location information of the terminal sent by the LMF.

9. A method for acquiring a location of a terminal, performed by a location management function (LMF), comprising:
receiving first request information sent by a core network element;
wherein the first request information is configured to request first location information of the terminal, the first request information indicates a location request, and the location request comprises at least one of:
the first location information being location information verified by a network; or
the first location information being location information obtained based on a reliable positioning method.

10. The method of claim 9, further comprising:
determining, in response to receiving the first request information, the reliable positioning method based on the first request information; and
performing positioning for the terminal based on the reliable positioning method to obtain the first location information.

11. The method of claim 10, further comprising:
sending the first location information to the core network element.

12. The method of claim 9, further comprising:
receiving second request information sent by the core network element, wherein the second request information is configured to request to acquire second location information of the terminal.

13. The method of claim 12, further comprising:
performing positioning, in response to receiving the second request information, for the terminal based on a positioning method to obtain the second location information.

14. The method of claim 13, further comprising:
sending the second location information to the core network element.

15. The method of claim 12, wherein the second request information further comprises information for subscribing to a positioning method for acquiring the second location information of the terminal.

16. The method of claim 12 or 15, further comprising:
sending information about the positioning method for acquiring the second location information of the terminal to the core network element.

17. An apparatus for acquiring a location of a terminal, comprising:
a sending module, configured to send first request information to a location management function (LMF);
wherein the first request information is configured to request first location information of the terminal, the first request information indicates a location request, and the location request comprises at least one of:
the first location information being location information verified by a network; or
the first location information being location information obtained based on a reliable positioning method.

18. An apparatus for acquiring a location of a terminal, comprising:
a receiving module, configured to receive first request information sent by a core network element;
wherein the first request information is configured to request first location information of the terminal, the first request information indicates a location request, and the location request comprises at least one of:
the first location information being location information verified by a network; or
the first location information being location information obtained based on a reliable positioning method.

19. A communication device, comprising:
a memory; and
a processor, coupled to the memory and configured to implement the method of any one of claims 1 to 8 or 9 to 16 by executing computer-executable instructions stored on the memory.

20. A computer storage medium storing computer executable instructions that, when being performed by a processor, implement the method of any one of claims 1 to 8 or 9 to 16.
